# EUROPÄISCHE PATENTSCHRIFT

(11) **EP 1 715 617 B1**
(45) Veröffentlichungstag und Bekanntmachung des Hinweises auf die Patenterteilung: **15.12.2010**
(21) Anmeldenummer: 06008085.0
(22) Anmeldetag: 19.04.2006
(51) Int. Cl.: H04L 9/32

(54) **Verfahren zum Betreiben eines Systems mit einem tragbaren Datenträger und einem Endgerät**
Method for operating a system with a portable data carrier and a terminal device
Procédé destiné à l'exploitation d'un système doté d'un support de données portatif et d'un terminal

(30) Priorität: 21.04.2005 DE 102005018561
(43) Veröffentlichungstag der Anmeldung: 25.10.2006
(73) Patentinhaber: Giesecke & Devrient GmbH, 81677 München (DE)
(72) Erfinder: Gawlas, Florian, Dr., 80804 München (DE); Meister, Gisela, Dr., 81737 München (DE)
(74) Vertreter: Klunker . Schmitt-Nilson . Hirsch

(56) Entgegenhaltungen:
- WO-A-01/15378
- WO-A-03/107585
- US-A1- 2003 219 121

## Beschreibung

Die Erfindung betrifft ein Verfahren zum Betreiben eines Systems mit einem tragbaren Datenträger und einem Endgerät. Weiterhin betrifft die Erfindung ein System mit einem tragbaren Datenträger und einem Endgerät.

Tragbare Datenträger können sehr vielfältig eingesetzt werden, beispielsweise zur Abwicklung von Transaktionen des Zahlungsverkehrs, als Ausweisdokumente bei Zugangskontrollen, als Berechtigungsnachweis zur Nutzung eines Mobilfunksystems usw. Bei einem Einsatz eines tragbaren Datenträgers findet in der Regel eine Datenübertragung zwischen dem tragbaren Datenträger und einem Endgerät statt. Diese Datenübertragung kann entweder kontaktlos oder durch eine berührende Kontaktierung des tragbaren Datenträgers durch das Endgerät stattfinden. Insbesondere wenn sicherheitsrelevante oder persönliche Daten übertragen werden, sind Maßnahmen zu ergreifen, mit denen ein Ausspähen der übertragenen Daten möglichst verhindert wird. Dies kann beispielsweise mit Hilfe von kryptographischen Verfahren erreicht werden. Mittels kryptographischer Verfahren kann auch geprüft werden, ob der tragbare Datenträger authentisch ist und von einer dazu berechtigten Person benutzt wird. Dadurch kann der Einsatz von gefälschten tragbaren Datenträgern bzw. eine Nutzung eines tragbaren Datenträgers durch einen unberechtigten Dritten verhindert werden.

Aus der DE 199 38 190 A1 ist ein Verfahren zur verschlüsselten Übertragung von Daten zwischen zwei Instanzen eines digitalen Kommunikationssystems bekannt. Dabei wird in der ersten Instanz eine erste Zufallszahl erzeugt und an die zweite Instanz unverschlüsselt übermittelt. In der zweiten Instanz wird eine zweite Zufallszahl erzeugt und zusammen mit einem für eine bestimmte Zeitdauer gültigen Zeitstempel unverschlüsselt an die erste Instanz übermittelt. In beiden Instanzen wird aus den beiden Zufallszahlen und dem Zeitstempel mittels einer kryptographischen Einwegfunktion ein temporärer Schlüssel ermittelt, mit dem die Instanzen für die Zeitdauer verschlüsselt kommunizieren können.

WO 03/107585 A1 offenbart ein Verfahren zum Aushandeln eines Session Keys zwischen einem Sicherheitsmodul und einem Empfänger, wobei das Sicherheitsmodul dem Empfänger zunächst eine mit einem geheimen Schlüssels eines asymmetrischen Schlüsselpaares verschlüsselte erste Zufallszahl schickt und der Empfänger nach deren Entschlüsselung durch Rücksenden einer mit dem öffentlichen Schlüssel des Schlüsselpaares verschlüsselten zweiten Zufallszahl antwortet. Durch Kombination der beiden danach im Sicherheitselement und Empfänger vorliegenden Zufallszahlen wird ein Sitzungsschlüssel erzeugt. Die Lösung erfordert die Bereithaltung eines öffentlichen Schlüssels des Empfängers und hat zudem den Nachteil, daß das Schlüsselpaar im Grundsatz vollständig übertragen wird, weshalb Angriffe hier prinzipiell zumindest denkbar sind.

US 2003/0219121 A1 beschreibt ein Verfahren zum sicheren Speichern von Daten mittels eines biometrischen Schlüssels. Die zu speichernden Daten werden dabei mittels eines von einem Zufallsgenerator gelieferten zufälligen Schlüssels verschlüsselt. Derselbe zufällige Schlüssel wird ferner mit einem biometrischen Datensatz zu einem Template verbunden und ebenfalls gespeichert. Um die gespeicherten Daten wiederzugewinnen, muß ein Nutzer erneut die dem biometrischen Schlüssel zugrundeliegenden biometrischen Daten präsentieren, aus denen dann wiederum ein Template erzeugt wird, das mit dem gespeicherten Template verglichen wird und bei Übereinstimmung den zufälligen Schlüssel liefert, mit dem die gespeicherten Daten wiedergewonnen werden können. Die bekannte Lösung befaßt sich nicht mit der Absicherung des Datenaustausches zwischen Eingabeeinrichtung und Speicher.

Die WO 01/008055 A1 offenbart ein Verfahren für eine sichere Datenübertragung über ein Telekommunikationsmedium, bei dem ein Validierungsmittel bereitgestellt wird, um sicherzustellen, dass eine Transaktion jeweils nur von einer dazu autorisierten Person ausgeführt wird. Insbesondere wird eine individuelle Beschreibung der Person bereitgestellt, die biometrische und finanzielle Daten der Person enthält. Aus den biometrischen Daten wird ein Schlüssel ermittelt, mit dem die individuelle Beschreibung verschlüsselt wird. Es werden biometrische Verifikationsdaten der Person ermittelt und mit den in der individuellen Beschreibung enthaltenen biometrischen Daten verglichen. Bei einer Übereinstimmung wird die Datenübertragung authentisiert.

Aus der WO 01/15378 A1 ist es bekannt, in einer Initialisierungsphase geheime Daten, wie beispielsweise einen privaten Signaturschlüssel, fehlertolerant zu kodieren und mit Hilfe von digitalisierten biometrischen Merkmalsdaten zu verschlüsseln. In einer Authentifizierungsphase werden aus einem bereitgestellten biometrischen Merkmal digitalisierte biometrische Authentifizierungsmerkmalsdaten erzeugt und damit mittels einer Entschlüsselung und anhand eines kodierungstheoretischen Verfahrens die geheimen Daten wiederhergestellt.

Verschlüsselungsverfahren stellen allerdings nur dann einen wirksamen Schutz dar, wenn die Schlüssel, die zum Entschlüsseln der Daten benötigt werden, vor unberechtigten Zugriffen geschützt sind. Dies kann insbesondere bei öffentlich zugänglichen Endgeräten sehr aufwendig sein. Diese Problematik besteht nicht nur im Hinblick auf eine Verschlüsselung bei der Datenübertragung sondern allgemein im Hinblick auf vertrauliche Informationen, die für kryptographische Verfahren oder für sonstige Zwecke benötigt werden.

Der Erfindung liegt demnach die Aufgabe zugrunde, beim Betrieb eines Systems mit einem tragbaren Datenträger und einem Endgerät mit einem vertretbaren Aufwand einen möglichst hohen Sicherheitsstandard zu gewährleisten.

Diese Aufgabe wird durch ein Verfahren mit der Merkmalskombination des Anspruchs 1 gelöst.

Beim erfindungsgemäßen Verfahren zum Betreiben eines Systems mit einem tragbaren Datenträger und einem Endgerät werden vom Endgerät erste Geheimdaten in verschlüsselter Form an den tragbaren Datenträger übertragen. Vom tragbaren Datenträger werden zweite Geheimdaten, die mit Hilfe von biometrischen Referenzdaten verschlüsselt sind, an das Endgerät übertragen. Vom Endgerät werden aus einem biometrischen Merkmal, das den biometrischen Referenzdaten zugrunde liegt, biometrische Daten ermittelt und mit Hilfe dieser biometrischen Daten die zweiten Geheimdaten entschlüsselt.

Die Erfindung hat den Vorteil, dass sie mit einem vergleichsweise geringen Aufwand einen sehr hohen Sicherheitsstandard ermöglicht. Da die Notwendigkeit entfällt, Geheimnisse dauerhaft im Endgerät zu speichern, werden an das Endgerät keine besonders hohen Sicherheitsanforderungen gestellt, so dass dieses kostengünstig verfügbar ist. Ein weiterer Vorteil besteht darin, dass keine biometrischen Daten öffentlich zugänglich gemacht werden müssen und somit der persönliche Datenschutz gewährleistet ist. Lediglich im tragbaren Datenträger sind biometrische Daten dauerhaft gespeichert und dienen als Referenzdaten. Im Endgerät kommt es lediglich zu einer temporären Speicherung biometrischer Daten. Eine Klartext-Übertragung biometrischer Daten findet nicht statt.

Vorzugsweise werden die ersten Geheimdaten vom Endgerät als Zufallsdaten generiert. Dadurch können Angriffe abgewehrt werden, die auf einer Aufzeichnung und nochmaligen Einspielung von Daten beruhen. Die ersten Geheimdaten werden bevorzugt mit Hilfe eines asymmetrischen Algorithmus verschlüsselt und es wird für die Verschlüsselung der ersten Geheimdaten insbesondere ein öffentlicher Schlüssel verwendet. Da der öffentliche Schlüssel ohnehin bekannt ist, erübrigen sich Schutzmaßnahmen des Endgeräts, durch die ein Ausspähen des Schlüssels verhindert wird. Gleichwohl sind die mit dem öffentlichen Schlüssel verschlüsselten Daten wirksam geschützt, da zur Entschlüsselung die Kenntnis eines weiteren Schlüssels erforderlich ist. Dieser weitere Schlüssel kann im tragbaren Datenträger gespeichert sein und insbesondere ein geheimer Schlüssel sein. Weiterhin kann vorgesehen sein, dass die ersten Geheimdaten vom tragbaren Datenträger entschlüsselt werden, so dass dieser Kenntnis von deren Klartextform hat.

Ein weiterer Verfahrensbeitrag des tragbaren Datenträgers kann darin bestehen, dass er die zweiten Geheimdaten als Zufallsdaten generiert. Vorzugsweise werden die zweiten Geheimdaten vom tragbaren Datenträger mit Hilfe eines symmetrischen Algorithmus verschlüsselt. Dadurch ist es möglich, dass sowohl die Verschlüsselung als auch die Entschlüsselung jeweils auf Basis des biometrischen Merkmals vorgenommen werden können. Hierzu können die biometrischen Referenzdaten vorab, beispielsweise im Rahmen der Ausgabe des tragbaren Datenträgers an den Inhaber, im tragbaren Datenträger gespeichert werden. Bei der Benutzung des tragbaren Datenträgers kann das biometrische Merkmal vom Endgerät mittels einer Sensoreinrichtung erfasst und auf diese Weise für das Endgerät verfügbar gemacht werden.

Da biometrische Merkmale in der Regel Änderungen unterliegen und sich bei deren Erfassung keine beliebige Genauigkeit erreichen lässt, ist es von Vorteil, wenn die biometrischen Referenzdaten und/ oder die biometrischen Daten mit Hilfe eines fehlertoleranten Verfahrens ermittelt werden. Andernfalls könnte es zu Problemen bei der Entschlüsselung der zweiten Geheimdaten durch das Endgerät kommen. Ebenso ist es auch möglich, dass die Verschlüsselung und/ oder die Entschlüsselung der zweiten Geheimdaten mit Hilfe eines fehlertoleranten Verfahrens durchgeführt wird.

Die ersten Geheimdaten und die zweiten Geheimdaten können vom Endgerät und/oder vom tragbaren Datenträger zu dritten Geheimdaten verknüpft werden. Mit den dritten Geheimdaten können zwischen dem Endgerät und dem tragbaren Datenträger zu übertragende Daten verschlüsselt werden. Weiterhin besteht die Möglichkeit, dass vom Endgerät auf Basis von Daten, die vom tragbaren Datenträger mit den dritten Geheimdaten verschlüsselt wurden, ermittelt wird, ob der tragbare Datenträger authentisch ist. Die Authentizität des tragbaren Datenträgers ist nämlich eine notwendige Bedingung dafür, dass der tragbare Datenträger und das Endgerät jeweils die gleichen dritten Geheimdaten ermitteln. Ebenso kann vom tragbaren Datenträger auf Basis von Daten, die vom Endgerät mit den dritten Geheimdaten verschlüsselt wurden, ermittelt werden, ob der tragbare Datenträger von einer berechtigten Person eingesetzt wird. Nur dann ist damit zu rechnen, dass das richtige biometrische Merkmal vorliegt und somit eine weitere notwendige Bedingung für die Identität der vom tragbaren Datenträger und vom Endgerät ermittelten dritten Geheimdaten erfüllt ist.

Das erfindungsgemäße System weist einen tragbaren Datenträger und ein Endgerät auf, zwischen denen wenigstens zeitweise eine Datenverbindung ausgebildet ist und zeichnet sich dadurch aus, dass im tragbaren Datenträger und/oder im Endgerät das erfindungsgemäße Verfahren implementiert ist.

Das Endgerät kann eine Sensoreinrichtung zur Erfassung des biometrischen Merkmals aufweisen. Der tragbare Datenträger ist vorzugsweise als eine Chipkarte ausgebildet.

Die Erfindung wird nachstehend anhand der in der Zeichnung dargestellten Ausführungsbeispiele erläutert, bei denen der tragbare Datenträger jeweils als eine Chipkarte ausgebildet ist. Die Erfindung bezieht allerdings gleichermaßen auch andere tragbare Datenträger ein. Dabei ist als ein tragbarer Datenträger im Sinn der Erfindung ein Rechnersystem anzusehen, bei dem die Ressourcen, d.h. Speicherressourcen und/oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für eine kontaktlose und/oder kontaktbehaftete Kommunikation mit einem Lesegerät oder Datenverarbeitungssystem (z.B. Personal Computer, Workstation, Server) haben.

Es zeigen:
- Fig.1: ein Ausführungsbeispiel des erfindungsgemäßen Systems in einer stark vereinfachten Blockdarstellung und
- Fig. 2: eine Darstellung einer Ausführungsform des erfindungsgemäßen Verfahrens.

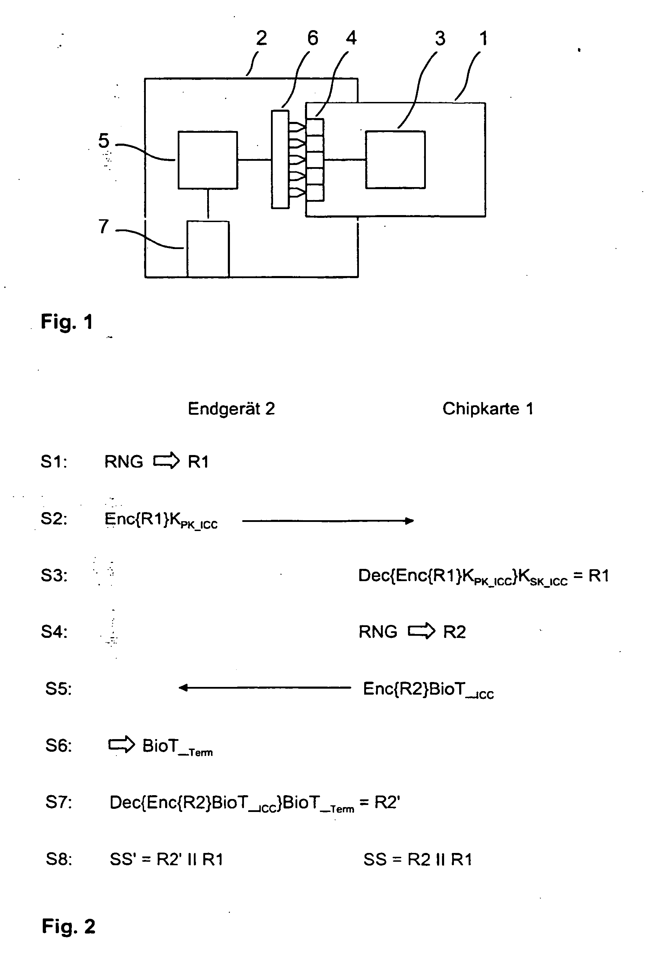

Fig. 1 zeigt ein Ausführungsbeispiel des erfindungsgemäßen Systems in einer stark vereinfachten Blockdarstellung. Das System weist eine Chipkarte 1 und ein Endgerät 2 auf. Die Chipkarte 1 verfügt über einen Mikrocontroller 3 und ein Kontaktfeld 4, das mit dem Mikrocontroller 3 verbunden ist. Anstelle des Kontaktfelds 4 oder zusätzlich zum Kontaktfeld 4 kann beispielsweise auch eine Antenne vorgesehen sein.

Das Endgerät 2 weist einen Mikrocontroller 5 auf, an den eine Kontaktiereinheit 6 und ein Fingerabdrucksensor 7 angeschlossen sind. Mit der Kontaktiereinheit 6 wird das Kontaktfeld 4 der Chipkarte 1 berührend kontaktiert und der Chipkarte 1 auf diese Weise eine Betriebsspannung und sonstige betriebsnotwendige Signale zugeführt. Außerdem wird durch die berührende Kontaktierung eine Datenverbindung zwischen dem Mikrocontroller 3 der Chipkarte 1 und dem Mikrocontroller 5 des Endgeräts 2 hergestellt. Beide Mikrocontroller 3 und 5 sind so ausgelegt, dass sie in der Lage sind, kryptographische Verfahren durchzuführen.

Der Fingerabdrucksensor 7 dient der Erfassung des Fingerabdrucks der Person, welche die Chipkarte 1 benutzt. In der Regel wird dies der Inhaber der Chipkarte 1 sein. Es besteht aber auch die Möglichkeit, dass eine andere Person berechtigt ist, die Chipkarte 1 zu benutzen oder dass eine dazu nicht berechtigte Person versucht, die Chipkarte 1 zu benutzen. Für den Fingerabdruck des Inhabers der Chipkarte 1 oder einer sonstigen berechtigten Person sind im Mikrocontroller 3 der Chipkarte 1 biometrische Referenzdaten BioT_ICC gespeichert, die vorab beispielsweise von einem Herausgeber der Chipkarte 1 aus einer oder mehreren Erfassungen des Fingerabdrucks ermittelt wurden. Dabei entsprechen die biometrischen Referenzdaten BioT_ICC vorzugsweise nicht einer photographischen Abbildung des Fingerabdrucks, sondern stellen beispielsweise einen auf charakteristische Merkmale reduzierten Datensatz dar. Anstelle des Fingerabdrucksensors 7 kann auch ein Sensor zur Erfassung eines sonstigen biometrischen Merkmals vorgesehen sein, beispielsweise des Augenhintergrunds, einer persönlichen Unterschrift inklusive der die Unterschrift charakterisierenden dynamischen Größen usw.

Wenn die Chipkarte 1 beispielsweise zum Ausführen einer im Mikrocontroller 3 der Chipkarte 1 implementierten Anwendung in das Endgerät 2 eingeführt wird, kann nach einer Anschaltsequenz zum Beispiel die in Fig. 2 dargestellte Abfolge durchlaufen werden, mit der letztendlich ein nur für diese Sitzung gültiger Schlüssel für die Datenübertragung zwischen der Chipkarte 1 und dem Endgerät 2 ermittelt wird. Wie im Folgenden noch näher erläutert wird, kann dabei auch festgestellt werden, ob die Chipkarte 1 authentisch ist und ob die Chipkarte 1 von einer dazu berechtigten Person benutzt wird.

Fig. 2 zeigt eine Darstellung einer Ausführungsform des erfindungsgemäßen Verfahrens. Dargestellt sind sowohl Verfahrensschritte, die vom Mikrocontroller 3 der Chipkarte 1 ausgeführt werden als auch Verfahrensschritte, die vom Mikrocontroller 5 des Endgeräts 2 ausgeführt werden. Dabei sind die Verfahrensschritte der Chipkarte 1 auf der rechten Seite, die Verfahrensschritte des Endgeräts 2 auf der linken Seite der Fig. 2 dargestellt.

Das Verfahren beginnt mit einem Schritt S1, in dem das Endgerät 2 mit Hilfe eines Zufallszahlengenerators RNG eine erste Zufallszahl R1 generiert. Auf Schritt S1 folgt ein Schritt S2, in dem das Endgerät 2 die erste Zufallszahl R1 verschlüsselt und in verschlüsselter Form an die Chipkarte 1 übermittelt. Die Verschlüsselung wird mit Hilfe eines asymmetrischen Verschlüsselungsverfahrens, beispielsweise des RSA-Verfahrens, durchgeführt. Als Schlüssel wird ein öffentlicher und damit nicht geheimhaltungsbedürftiger Schlüssel KPK_ICC eines Schlüsselpaares verwendet, dessen privater Schlüssel KSK_ICC in der Chipkarte 1 gespeichert ist. Im Gegensatz zum öffentlichen Schlüssel K_{PK_ICC} ist der private Schlüssel K_{SK_ICC} geheim zu halten.

Die Chipkarte 1 entschlüsselt die verschlüsselte erste Zufallszahl R1 in einem Schritt S3, der sich an Schritt S2 anschließt, mit Hilfe des privaten Schlüssels KSK_ICC. Somit verfügen ab diesen Zeitpunkt sowohl das Endgerät 2 als auch die Chipkarte 1 über die erste Zufallszahl R1 im Klartext, d. h. in unverschlüsselter Form.

Im Anschluss an Schritt S3 generiert die Chipkarte 1 in einem Schritt S4 mit Hilfe eines Zufallszahlengenerators RNG eine zweite Zufallszahl R2. Danach folgt ein Schritt S5, in dem die Chipkarte 1 die zweite Zufallszahl R2 verschlüsselt und in verschlüsselter Form an das Endgerät 2 übermittelt. Im Gegensatz zur Verschlüsselung des Schrittes S2 wird im Schritt S5 ein symmetrisches Verschlüsselungsverfahren eingesetzt. Als Schlüssel werden die biometrische Referenzdaten BioT_ICC des Inhabers der Chipkarte 1 verwendet, die auch als biometrisches Template bezeichnet werden und in der Chipkarte 1 gespeichert sind. Die biometrischen Referenzdaten BioT_ICC werden vorab beispielsweise vom Herausgeber ermittelt, von dem der Inhaber die Chipkarte 1 bezieht. Hierzu wird im Falle des Ausführungsbeispiels gemäß Fig.1 der Fingerabdruck des Inhabers einmal oder mehrmals erfasst und die so erhaltenen Daten zu den biometrischen Referenzdaten BioT_ICC weiterverarbeitet. Durch die Weiterverarbeitung kann beispielsweise der Informationsgehalt verdichtet werden und/oder eine Aufbereitung in einer Form erfolgen, welche die zukünftige Nutzung der Referenzdaten BioT_ICC erleichtert und eine gewisse Fehlertoleranz ermöglicht. In entsprechender Weise wird auch vorgegangen, wenn ein anderes biometrisches Merkmal verwendet wird.

Die biometrischen Referenzdaten BioT_ICC sind ebenso wie der private Schlüssel K_{SK_ICC} zugriffsgeschützt im Mikrocontroller 3 der Chipkarte 1 gespeichert und werden nicht im Klartext ausgegeben. Im Endgerät 2 sind die biometrischen Referenzdaten BioT_ICC nicht gespeichert, so dass das Endgerät 2 zunächst über keine Möglichkeit verfügt, die in verschlüsselter Form von der Chipkarte 1 übermittelte zweite Zufallszahl R2 zu entschlüsseln.

Um die zweite Zufallszahl R2 dem Endgerät 2 dennoch zugänglich zu machen, wird als nächstes ein Schritt S6 ausgeführt, in dem der Inhaber der Chipkarte 1 einen Finger, für den die für die Verschlüsselung der zweiten Zufallszahl R2 verwendeten biometrischen Referenzdaten ermittelt wurden, auf den Fingerabdrucksensor 7 des Endgeräts 2 auflegt. Das Endgerät 2 erfasst den Fingerabdruck 7 des Inhabers der Chipkarte 1 und ermittelt daraus biometrische Daten BioT_Term. Da in der Regel der vom Endgerät 2 erfasste Fingerabdruck nicht vollständig mit dem vorab erfassten Fingerabdruck übereinstimmen wird, werden die so ermittelten biometrische Daten BioT_Term zunächst nicht vollständig mit den biometrischen Referenzdaten BioT_ICC übereinstimmen, mit denen die Verschlüsselung der zweiten Zufallszahl R2 durchgeführt wurde. Ohne weitere Maßnahmen wird daher eine Entschlüsselung der zweiten Zufallszahl R2 in der Regel noch nicht möglich sein.

Es wird deshalb im Rahmen des Schritts S6 weiterhin eine Fehlerkorrektur durchgeführt, die unterschiedliche erfasste Fingerabdruckdaten auf dieselben biometrischen Daten BioT_Term abbildet, wenn diese innerhalb eines Toleranzbereichs liegen. Derartige Fehlerkorrekturen sind für sich bekannt. Eine mögliche Durchführung der Fehlerkorrektur ist beispielsweise in der WO 01/15378 A1 beschrieben. Durch die Fehlerkorrektur wird erreicht, dass die biometrischen Daten BioT_Term mit den biometrischen Referenzdaten BioT_ICC vollständig übereinstimmen, falls sich die jeweils zugehörigen Fingerabdrücke nicht allzu sehr voneinander unterscheiden. Somit können die biometrischen Daten BioT_Term für die Entschlüsselung der zweiten Zufallszahl R2 herangezogen werden. Diese Entschlüsselung mit den biometrischen Daten BioT_Term als Schlüssel wird in einem sich anschließenden Schritt S7 durchgeführt und liefert einen Wert R2'. Im Falle einer ausreichenden Übereinstimmung der Fingerabdrücke stimmt der Wert R2' mit der von der Chipkarte 1 generierten zweiten Zufallszahl R2 überein. Nach der Ausführung des Schritts S7 verfügen somit sowohl das Endgerät 2 als auch die Chipkarte 1 über die beiden Zufallszahlen R1 und R2 im Klartext.

Auf Schritt S7 folgt ein Schritt S8, in dem sowohl das Endgerät 2 als auch die Chipkarte 1 aus den beiden Zufallszahlen R1 und R2 bzw. R2' jeweils einen Schlüssel SS bzw. SS' für die aktuelle Sitzung ermittelt, der auch als session key bezeichnet wird. Da das Endgerät 2 und die Chipkarte 1 bei ausreichend übereinstimmenden Fingerabdrücken hierfür die gleichen Zufallszahlen R1 und R2 verwenden, sind auch die ermittelten Schlüssel SS und SS' gleich. Der Schlüssel SS kann somit für die Verschlüsselung und Entschlüsselung einer nachfolgenden Datenübertragung zwischen der Chipkarte 1 und dem Endgerät 2 verwendet werden. Eine derart verschlüsselte Datenübertragung führt nur dann zu einer Verständigung zwischen der Chipkarte 1 und dem Endgerät 2, wenn diese über den gleichen Schlüssel SS verfügen. Dies setzt wiederum voraus, dass alle vorstehend beschriebenen Verfahrensschritte korrekt durchgeführt wurden.

Eine notwendige Voraussetzung für eine Verständigung zwischen der Chipkarte 1 und dem Endgerät 2 bei einer Verschlüsselung der übertragenen Daten mit dem Schlüssel SS besteht somit darin, dass in der Chipkarte 1 der korrekte private Schlüssel KSK_ICC abgelegt ist. Dies bedeutet wiederum, dass die Chipkarte 1 authentisch ist. Somit kann bei der beschriebenen Ausführungsform des erfindungsgemäßen Verfahrens zusätzlich eine positive Aussage zur Authentizität der Chipkarte 1 gemacht werden. Eine weitere notwendige Bedingung besteht darin, dass die biometrischen Daten BioT_Term mit den biometrischen Referenzdaten BioT_ICC übereinstimmen. Dies ist nur dann der Fall, wenn die Daten zur selben Person gehören. Somit lässt sich auch eine positive Aussage zur Authentizität der Person machen, welche die Chipkarte 1 benutzt und eine Benutzung der Chipkarte 1 durch einen unberechtigten Dritten verhindern.

In einer Abwandlung des vorbeschriebenen Verfahrens führt die Chipkarte 1 die Ermittlung des Schlüssels SS durch Verknüpfung von R1 und R2 unmittelbar nach Schritt S4 durch und verschlüsselt ansclißend die erhaltene Verknüpfung mit dem den biometrischen Referenzdaten BioT_ICC. Das resultierende Chiffrat entschlüsselt das Endgerät 2 analog zu Schritt S7, wobei jetzt eine Verknüpfung von R1' und R2' resultiert. Die Verknüpfung löst das Endgerät 2 nach R1' und R2' auf und prüft, ob die Zufallszahl R1' mit der ursprünglich versandten Zufallszahl R1 übereinstimmt. Ist das der Fall, ist die Authentizität der Chipkarte 1 bewiesen, da sie R1' nur bilden kann, wenn sie im Besitz des privaten Schlüssels KSK_ICC ist. R1 und R2' dienen sodann anlog Schritt S8 zur Bildung des Schlüssels SS'.

In einer Variante des vorbeschrieben Abwandlung übermittelt die Chipkarte 1 dem Endgerät 2 in Schritt S5 ein Chiffrat, das durch Verschlüsselung einer aus der Zufallszahl R2 und der mit dem Schlüssel SS verschlüsselten Zufallszahl R2 gebildeten Verknüpfung mit den biometrischen Referenzdaten BioT_ICC erhalten wird. Das Endgerät 2 gewinnt dann in Schritt S7 zunächst die Zufallszahl R2' sowie eine Verknüpfung SS" aus der Zufallszahl R2' und einer mit SS verschlüsselten Zufallszahl R2'. Nach Bilden von SS' durch Verknüpfen von R2' und R1 prüft das Endgerät 2, ob SS' mit SS" übereinstimmt. Trifft das zu, ist die Authentizität der Chipkarte 1 bewiesen und zusätzlich sicher, daß Endgerät 2 und Chipkarte 1 denselben Schlüssel SS bzw. SS' verwenden.

Das erfindungsgemäße Verfahren kann im übrigen auch so abgewandelt werden, dass es primär oder ausschließlich zur Authentisierung der Chipkarte 1 bzw. der Person, welche die Chipkarte 1 verwendet, eingesetzt wird.

## Patentansprüche

1. Verfahren zum Betreiben eines Systems mit einem tragbaren Datenträger (1) und einem Endgerät (2), wobei
- auf dem tragbaren Datenträger (1) vorab biometrischen Referenzdaten (BioT_{_ICC}) gespeichert werden,
- vom Endgerät (2) erste Geheimdaten (R1) in verschlüsselter Form an den tragbaren Datenträger (1) übertragen werden,
- vom tragbaren Datenträger (1) zweite Geheimdaten (R2), die mit Hilfe der biometrischen Referenzdaten (BioT__{ICC}) verschlüsselt sind, an das Endgerät (2) übertragen werden,
- vom Endgerät (2) mittels einer Sensoreinrichtung (7) das den biometrischen Referenzdaten (BioT_ICC) zugrundeliegende biometrische Merkmal erfasst wird, vom Endgerät (2) aus dem erfaßten biometrischen Merkmal, biometrische Daten (BioT__{Term}) ermittelt werden,
- mit Hilfe der biometrischen Daten (BioT__{Term}) die zweiten Geheimdaten (R2) entschlüsselt werden, und
- die ersten Geheimdaten (R1) und die zweiten Geheimdaten (R2) vom Endgerät (2) und vom tragbaren Datenträger (1) zu dritten Geheimdaten (SS', SS) verknüpft werden,
- mit den dritten Geheimdaten (SS', SS) zwischen dem Endgerät (2) und dem tragbaren Datenträger (1) zu übertragende Daten verschlüsselt werden.

2. Verfahren nach Anspruch 1, **dadurch gekennzeichnet, dass** die ersten Geheimdaten (R1) vom Endgerät (2) als Zufallsdaten generiert werden.

3. Verfahren nach einem der vorhergehenden Ansprüche, **dadurch gekennzeichnet, dass** die ersten Geheimdaten (R1) mit Hilfe eines asymmetrischen Algorithmus verschlüsselt werden.

4. Verfahren nach einem der vorhergehenden Ansprüche, **dadurch gekennzeichnet, dass** für die Verschlüsselung der ersten Geheimdaten (R1) ein öffentlicher Schlüssel (K_{PK_ICC}) verwendet wird.

5. Verfahren nach einem der vorhergehenden Ansprüche, **dadurch gekennzeichnet, dass** die ersten Geheimdaten (R1) vom tragbaren Datenträger (1) entschlüsselt werden.

6. Verfahren nach einem der vorhergehenden Ansprüche, **dadurch gekennzeichnet, dass** die ersten Geheimdaten (R1) mittels eines im tragbaren Datenträger (1) gespeicherten Schlüssels (K_{SK_ICC}) entschlüsselt werden.

7. Verfahren nach einem der Ansprüche 5 oder 6, **dadurch gekennzeichnet, dass** für die Entschlüsselung der ersten Geheimdaten (R1) ein geheimer Schlüssel (K_{SK_ICC}) verwendet wird.

8. Verfahren nach einem der vorhergehenden Ansprüche, **dadurch gekennzeichnet, dass** die zweiten Geheimdaten (R2) vom tragbaren Datenträger (1) als Zufallsdaten generiert werden.

9. Verfahren nach einem der vorhergehenden Ansprüche, **dadurch gekennzeichnet, dass** die zweiten Geheimdaten (R2) vom tragbaren Datenträger (1) mit Hilfe eines symmetrischen Algorithmus verschlüsselt werden.

10. Verfahren nach einem der vorhergehenden Ansprüche, **dadurch gekennzeichnet, dass** die biometrischen Referenzdaten (BioT_{_ICC}) und/oder die biometrischen Daten (BioT_{_Term}) mit Hilfe eines fehlertoleranten Verfahrens ermittelt werden.

11. Verfahren nach einem der vorhergehenden Ansprüche, **dadurch gekennzeichnet, dass** die Verschlüsselung und die Entschlüsselung der zweiten Geheimdaten (R2) mit Hilfe eines fehlertoleranten Verfahrens durchgeführt wird.

12. Verfahren nach einem der vorhergehenden Ansprüche, **dadurch gekennzeichnet, dass** vom Endgerät (2) auf Basis von Daten, die vom tragbaren Datenträger (1) mit den dritten Geheimdaten (S) verschlüsselt wurden, ermittelt wird, ob der tragbare Datenträger (1) authentisch ist.

13. Verfahren nach einem der vorhergehenden Ansprüche, **dadurch gekennzeichnet, dass** vom tragbaren Datenträger (1) auf Basis von Daten, die vom Endgerät (2) mit den dritten Geheimdaten (S') verschlüsselt wurden, ermittelt wird, ob der tragbare Datenträger (1) von einer berechtigten Person eingesetzt wird.

14. System mit einem tragbaren Datenträger (1) und einem Endgerät (2), zwischen denen wenigstens zeitweise eine Datenverbindung ausgebildet ist, **dadurch gekennzeichnet, dass** im tragbaren Datenträger (1) und/oder im Endgerät (2) Mittel vorgesehen sind, welche implementieren ein Verfahren gemäß einem der vorhergehenden Ansprüche.

15. System nach Anspruch 14, **dadurch gekennzeichnet, dass** das Endgerät (2) eine Sensoreinrichtung (7) zur Erfassung des biometrischen Merkmals aufweist.

16. System nach einem der Ansprüche 14 oder 15, **dadurch gekennzeichnet, dass** der tragbare Datenträger (1) als eine Chipkarte ausgebildet ist.

## Claims

1. A method for operating a system having a portable data carrier (1) and a terminal (2), wherein
- biometric reference data (BioT__{ICC}) are stored in advance on the portable data carrier (1),
- first secret data (R1) are transferred by the terminal (2) to the portable data carrier (1) in encrypted form,
- second secret data (R2) encrypted using the biometric reference data (BioT__{ICC}) are transferred by the portable data carrier (1) to the terminal (2),
- the biometric feature underlying the biometric reference data (BioT__{ICC}) is captured by the terminal (2) by means of a sensor device (7), biometric data (BioT__{Term}) are ascertained from the captured biometric feature by the terminal (2),
- the second secret data (R2) are decrypted using the biometric data (BioT__{Term}), and
- the first secret data (R1) and the second secret data (R2) are linked to third secret data (SS', SS) by the terminal (2) and by the portable data carrier (1),
- data to be transferred between the terminal (2) and the portable data carrier (1) are encrypted with the third secret data (SS', SS).

2. The method according to claim 1, **characterized in that** the first secret data (R1) are generated by the terminal (2) as random data.

3. The method according to either of the preceding claims, **characterized in that** the first secret data (R1) are encrypted using an asymmetric algorithm.

4. The method according to any of the preceding claims, **characterized in that** a public key (K_{PK_ICC}) is employed for encrypting the first secret data (R1).

5. The method according to any of the preceding claims, **characterized in that** the first secret data (R1) are decrypted by the portable data carrier (1).

6. The method according to any of the preceding claims, **characterized in that** the first secret data (R1) are decrypted by means of a key (K_{SK_ICC}) stored in the portable data carrier (1).

7. The method according to either of claims 5 to 6, **characterized in that** a secret key (K_{SK_ICC}) is employed for decrypting the first secret data (R1).

8. The method according to any of the preceding claims, **characterized in that** the second secret data (R2) are generated by the portable data carrier (1) as random data.

9. The method according to any of the preceding claims, **characterized in that** the second secret data (R2) are encrypted by the portable data carrier (1) using a symmetric algorithm.

10. The method according to any of the preceding claims, **characterized in that** the biometric reference data (BioT__{ICC}) and/or the biometric data (BioT__{Term}) are ascertained using an error-tolerant method.

11. The method according to any of the preceding claims, **characterized in that** the encryption and decryption of the second secret data (R2) is carried out using an error-tolerant method.

12. The method according to any of the preceding claims, **characterized in that** it is ascertained by the terminal (2) on the basis of data encrypted with the third secret data (S) by the portable data carrier (1) whether the portable data carrier (1) is authentic.

13. The method according to any of the preceding claims, **characterized in that** it is ascertained by the portable data carrier (1) on the basis of data encrypted with the third secret data (S') by the terminal (2) whether the portable data carrier (1) is being used by an authorized person.

14. A system having a portable data carrier (1) and a terminal (2) between which a data connection is formed at least temporarily, **characterized in that** means are provided in the portable data carrier (1) and/or in the terminal (2) which implement a method according to any of the preceding claims.

15. The system according to claim 14, **characterized in that** the terminal (2) has a sensor device (7) for capturing the biometric feature.

16. The system according to either of claims 14 to 15, **characterized in that** the portable data carrier (1) is configured as a chip card.

## Revendications

1. Procédé d'exploitation d'un système comportant un support de données portable (1) et un terminal (2),
- des données de référence biométriques (BioT_{_ICC}) étant préalablement mémorisées sur le support de données portable (1),
- des premières données secrètes (R1) étant transmises par le terminal (2) au support de données portable (1) sous forme chiffrée,
- des deuxièmes données secrètes (R2) chiffrées à l'aide des données de référence biométriques (BioT__{ICC}) étant transmises par le support de données portable (1) au terminal (2),
- la caractéristique biométrique fondamentale des données de référence biométriques (BioT_ICC) étant saisie par le terminal (2) au moyen d'un appareillage capteur (7), des données biométriques (BioT__{Term}) étant calculées par le terminal (2) à partir de la caractéristique biométrique saisie,
- les deuxièmes données secrètes (R2) étant déchiffrées à l'aide des données biométriques (BioT_{_Term}), et
- les premières données secrètes (R1) et les deuxièmes données secrètes (R2) étant combinées par le terminal (2) et par le support de données portable (1) de manière à obtenir des troisièmes données secrètes (SS', SS),
- des données à transmettre entre le terminal (2) et le support de données portable (1) étant chiffrées avec les troisièmes données secrètes (SS', SS).

2. Procédé selon la revendication 1, **caractérisé en ce que** les premières données secrètes (R1) sont générées par le terminal (2) en tant que données aléatoires.

3. Procédé selon une des revendications précédentes, **caractérisé en ce que** les premières données secrètes (R1) sont chiffrées à l'aide d'un algorithme asymétrique.

4. Procédé selon une des revendications précédentes, **caractérisé en ce que** c'est une clé publique (K_{PK_ICC}) qui est utilisée pour le chiffrement des premières données secrètes (R1).

5. Procédé selon une des revendications précédentes, **caractérisé en ce que** les premières données secrètes (R1) sont déchiffrées par le support de données portable (1).

6. Procédé selon une des revendications précédentes, **caractérisé en ce que** les premières données secrètes (R1) sont déchiffrées au moyen d'une clé (K_{SK_ICC}) mémorisée dans le support de données portable (1).

7. Procédé selon une des revendications 5 ou 6, **caractérisé en ce que** c'est une clé secrète (K_{SK_ICC}) qui est utilisée pour le déchiffrement des premières données secrètes (R1).

8. Procédé selon une des revendications précédentes, **caractérisé en ce que** les deuxièmes données secrètes (R2) sont générées par le support de données portable (1) en tant que données aléatoires.

9. Procédé selon une des revendications précédentes, **caractérisé en ce que** les deuxièmes données secrètes (R2) sont chiffrées par le support de données portable (1) à l'aide d'un algorithme symétrique.

10. Procédé selon une des revendications précédentes, **caractérisé en ce que** les données de référence biométriques (BioT__{ICC}) et/ou les données biométriques (BioT__{Term}) sont calculées à l'aide d'un procédé insensible aux défaillances.

11. Procédé selon une des revendications précédentes, **caractérisé en ce que** le chiffrement et le déchiffrement des deuxièmes données secrètes (R2) sont exécutés à l'aide d'un procédé insensible aux défaillances.

12. Procédé selon une des revendications précédentes, **caractérisé en ce que**, sur la base de données qui ont été chiffrées par le support de données portable (1) avec les troisièmes données secrètes (S), il est calculé par le terminal (2) si le support de données portable (1) est authentique.

13. Procédé selon une des revendications précédentes, **caractérisé en ce que**, sur la base de données qui ont été chiffrées par le terminal (2) avec les troisièmes données secrètes (S'), il est calculé par le support de données portable (1) si le support de données portable (1) est utilisé par une personne habilitée.

14. Système comprenant un support de données portable (1) et un terminal (2) entre lesquels une connexion de données est établie au moins temporairement, **caractérisé en ce que** des moyens qui implémentent un procédé selon une des revendications précédentes sont prévus dans le support de données portable (1) et/ou dans le terminal (2).

15. Système selon la revendication 14, **caractérisé en ce que** le terminal (2) comporte un appareillage capteur (7) pour la saisie de la caractéristique biométrique.

16. Procédé selon une des revendications 14 ou 15, **caractérisé en ce que** le support de données portable (1) est réalisé sous forme d'une carte à puce.
